# EUROPEAN PATENT APPLICATION

(11) **EP 4 141 715 A1**
(43) Date of publication of application: **01.03.2023**
(21) Application number: 21192642.3
(22) Date of filing: 23.08.2021
(51) Int. Cl.: G06F 21/55, G06K 9/62, H04W 4/40

(54) **ANOMALY DETECTION**

(71) Applicant: FUJITSU LIMITED, Kanagawa 211-8588 (JP)
(72) Inventor: MESSOUS, Ayoub, Slough, SL1 1EP (GB)
(74) Representative: Haseltine Lake Kempner LLP

(57) **Abstract**

A computer-implemented method comprising: providing data of at least one of distance, time, and velocity as at least one trajectory feature, the data defining a plurality of vehicle trajectories; computing for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features; implementing a clustering algorithm on the points and selecting, based on a result of the clustering algorithm, at least one point as an anomaly; and selecting the at least one vehicle trajectory corresponding to the at least one point as at least one anomalous vehicle trajectory.

## Description

The present invention relates to anomaly detection, in particular to a method, computer program, and apparatus for anomaly detection.

Over the past few years, growth has been seen in Intelligent Transportation Systems (ITS) and advanced vehicular technologies. Major research groups from academia and industry alike have been focusing on connected cars and autonomous driving vehicles. Modern cars nowadays are equipped with numerous on-board sensors in order to sense information about their environments and communication links in order to exchange data with other entities. The rapid emergence of mobility enhanced applications and services has led to unprecedented cyber security vulnerabilities and threats on privacy.

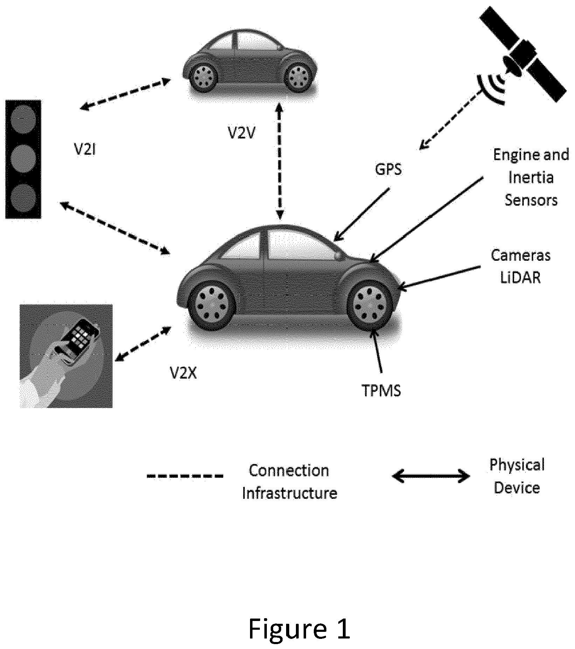

**Figure 1** represents a synoptic view for the most common attack surface (which represents points on a network where an adversary may attempt to gain entry to information systems) for connected cars. Figure 1 illustrates as points of possible attack V2I (the connection(s) between a vehicle and road-side equipment, e.g. infrastructure such as traffic lights), V2V (the connection(s) between a vehicle and other vehicles), GPS (connection(s) between a vehicle and a GPS (Global Positioning System) device, e.g. a signal received from a GPS device), engine and inertia sensors in the vehicle and other devices (such as cameras, LiDAR (Light Detection and Ranging) devices, and TPMS (Tire Pressure and Monitoring System) devices), and V2X (the connection(s) between a vehicle and a mobile device). Figure 1 is not exhaustive.

Some of the most sensitive information that needs to be actively protected is related to the physical position/location of the vehicle obtained through GPS. Most mobility applications, such as those involving real-time traffic conditions, navigation, and infotainment services, rely on the location information of vehicles. If the location information is not accurate, most of the mobility services will therefore not function properly. Moreover, false or compromised location information could result in an accident that could cause financial loss and/or even threaten occupants' safety (as described in "Detecting Location Spoofing using ADAS sensors in VANETs" by Lim, K. et al, 2019 16th IEEE Annual Consumer Communications and Networking Conference, CCNC 2019, 1-4, available at https://doi.org/10.1109/CCNC.2019.8651763).

GPS has revolutionized modern ITS and mobility systems. However, this has resulted in higher threats of attacks targeting location information. These types of attacks may include sending fake GPS information (GPS spoofing) (as described in "Investigation of multi-device location spoofing attacks on air traffic control and possible countermeasures" by Moser, D. et al, Proceedings of the Annual International Conference on Mobile Computing and Networking, MOBICOM, 0(1), 375-386, available at https://doi.org/10.1145/2973750.2973763).

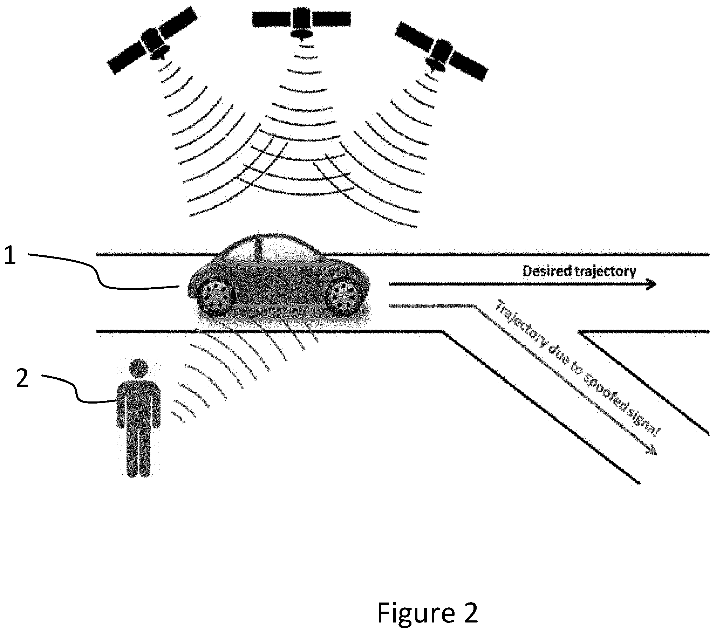

**Figure 2** illustrates a possible outcome of a GPS spoofing attack, in which a malicious adversary (an attacker) 2 performs a targeted cyber-attack to reroute the trajectory of a vehicle 1. Other possible outcomes include, for example in the context of attacks targeting semi-autonomous assisted-driving vehicles, deviating selected vehicles from their intended track, e.g. to exhaust fuel resources, to steal such vehicles, or to crash them (as described in "Drive me not: GPS spoofing detection via cellular network (architectures, models, and experiments)" by Oligeri, G. et al, WiSec 2019 - Proceedings of the 2019 Conference on Security and Privacy in Wireless and Mobile Networks, 12-22, available at https://doi.org/10.1145/3317549.3319719). As a consequence, implementing appropriate countermeasures against such attacks is essential for safekeeping vulnerable assets.

In order to protect against location spoofing attacks, various approaches have been proposed. One of the approaches is to detect spoofed signals through a location diversity scheme including retrieving positions (location information) from different sources/receivers (described in "Multi-receiver GPS Spoofing Detection: Error Models and Realization" by K. Jansen et al, Proceedings of the 32nd Annual Conference on Computer Security Applications (ACSAC '16). 237-250). Another approach, which involves cryptography, is to use public-key infrastructure (PKI) schemes to detect and promptly revoke certificates used by malicious nodes. Another approach is deploying intrusion detection and prevention systems (IDS). This latter approach involves monitoring and analysing events for signs of intrusion (described in "Survey on misbehaviour detection in cooperative intelligent transportation systems" by Van Der Heijden et al, IEEE Communications Surveys and Tutorials, 21(1), 779-811, available at https://doi.org/10.1109/COMST.2018.2873088).

An IDS is a device or software application that monitors a network or systems for malicious activity or policy violations. Any intrusion activity or violation would usually be reported to an IT administrator or collected centrally through a security information and event management (SIEM) system. A SIEM system combines outputs originating from multiple sources and uses special filtering techniques to differentiate malicious activity from false alarms.

In general, there are two basic IDS approaches: (i) signature-based detection and (ii) anomaly-based detection.

Signature-based detection is based on misuse detection techniques and uses patterns of well-known attacks to match and identify known intrusions. Signature-based detection undertakes pattern matching between any captured events (potential attacks) and known signatures of attacks. An alarm may be generated if a match is detected. An advantage of signature-based detection is that it may accurately detect instances of already known attacks. However, signature-based detection may not detect new intrusions or zero-day attacks (as described in "Unsupervised Clustering Approach for Network Anomaly Detection" by Syarif, I et al, Communications in Computer and Information Science, 293 PART 1, 63-77, available at https://doi.org/10.1007/978-3-642-30507-8).

Anomaly-based detection focuses on identifying behaviour which is not "normal" to detect attacks. In more detail, a baseline model of what constitutes "normal" behaviour is drawn and then any deviation from the previously established baseline may generate an alert (as described in "Message Type Identification of Binary Network Protocols using Continuous Segment Similarity" by Kleber, S. et al, Proceedings - IEEE INFOCOM, 2020-July, 2243-2252, available at https://doi.org/10.1109/INFOCOM41043.2020.9155275). The previously defined baseline represents a set of behavioural data that serves as a reference for establishing what are "normal" activities, which would eventually be analysed and thoroughly studied in order to help security analysts in identifying anomalies that indicate the presence of threats. When analysed with rich contextual detail, baselines make threat detection faster and more accurate, using statistical tests to determine whether the observed behaviour (e.g. transaction) deviates from the normal profile. In a particular example, a score is assigned by the IDS to each transaction whose profile deviates from the normal. If the score reaches a previously set threshold (based on number of occurrences over a specific period of time, for instance), an alarm is raised.

An advantage of anomaly-based detection, compared to signature-based models, is that no prior knowledge about intrusions is required. Thus, anomaly-based detection may be used to detect "new" intrusions or attacks. A disadvantage of anomaly-based detection is that it lacks a proper description of what constitutes an attack and may in some implementations have a high false positive rate (as described in "Intrusion Detection Method Based on Improved K-Means Algorithm" by Meng, C. et al, Journal of Physics: Conference Series, 1302(3), 429-433, available at https://doi.org/10.1088/1742-6596/1302/3/032011).

Existing tools for anomaly detection are divided into two different approaches: (i) supervised detection and (ii) unsupervised detection (also referred to as unsupervised classification or unsupervised classification for anomaly detection). Each approach has some limitations. The main inefficiencies and challenges facing each approach are summarized below.

### Supervised detection approach:

This approach requires access to relevant labelled data in order to function properly. Furthermore, the quality and size of the data available for training may have a great impact on overall performances. Poor data quality may result in very poor detection rates. For example, if only small or limited data is available for training, detection performance would suffer. However, a large amount of data would require considerable computation and storage resources for the training.

Another limitation of the supervised detection approach is related to the fact that such methods may not be applied without properly annotated and/or labelled data. In many cases, this latter aspect may represent a serious issue because of the technical challenges.

### Unsupervised classification for anomaly detection:

Unsupervised classification solutions for anomaly detection do not require labelled data access, however they still face some limitations. For instance, they may require detailed inputs from a human expert in order to perform the detection, which may lead to the issue of only reflecting the subject matter expert's understanding of attacks (which may be particularly hard to comprehend for highly sophisticated attacks). Therefore, when lacking the full understanding of the nature of anomalies, it may not be possible to properly adopt such a detection tool. Moreover, most of the previous tools mainly focus on limited discrete events to find and/or infer correlations between data. Therefore, they do not achieve and/or consider large scale understanding of anomalies.

In general, one of the major challenges in implementing anomaly analysis and detection tools is related to dataset access problems. It is difficult to acquire relevant anomalous data from real-world applications due to several limitations, such as access-related restrictions for privacy reasons or low economic incentive for making data freely available. Additionally, defects and/or anomalous events may be extremely rare in production environments. These challenges mean that unsupervised learning approaches are the most suitable when dealing with data access limitations due to unlabelled, incomplete or missing data.

Digital Transformation (DXR) operations have witnessed a rapid surge in terms of potential applications. This is especially true for emerging cyber security solutions and privacy preserving services due to ever increasing cyber threats and sophisticated new cyberattacks.

In light of the above, it is desirable to provide improved anomaly detection.

According to an embodiment of a first aspect there is disclosed herein a computer-implemented method comprising: providing data of at least one of distance, time, and velocity as at least one trajectory feature, the data defining a plurality of vehicle trajectories; computing for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features; implementing a clustering algorithm on the points and selecting, based on a result of the clustering algorithm, at least one point as an anomaly; and selecting the at least one vehicle trajectory corresponding to the at least one point as at least one anomalous vehicle trajectory. Such a method may achieve early detection of cyber-attacks through detecting anomalous vehicle trajectories and thus potentially dangerous events from a plurality of vehicle trajectories. Using specific meta-features (as described above) as entries for the new implementation of the advanced anomaly detection algorithm leads to accurate and quickly-obtained results. For example, results are obtained more quickly compared to e.g. a human operator looking at data logs and trying to identify anomalies. Further, such a human operator would need to be highly trained with extensive expertise, however the tool requires relatively little training.

Such a method is suitable for identifying anomalous trajectories (and thus identifying attacks) with respect to any connected vehicle. Suitable vehicles may have different autonomy levels ranging from assisted to self-driving cars to cars in which a human operator is fully in control of the car (and uses positioning (i.e. GPS) information to make decisions about their trajectory), and may rely on GPS information for their decision-making.

Global positioning systems are widely used in different settings covering an important range of possible applications (land, air, and waterways) where exact physical location is vital. The present invention may be applied to any vehicle, for example land vehicles, including all inland mobile vehicles that are equipped with communication capabilities for communicating with other entities in their environment or with a remotely located system. These (connected) vehicles may range from highly autonomous self-driving cars with high levels of autonomy that require precise positioning to effectively navigate through their environment to cars with only e.g. simple infotainment systems that use location tracking for advertisement related services, but not specifically for navigation. Such (connected) vehicles include e.g. trucks and buses, for example that are equipped with GPS and use this information to plan and decide their trajectories.

This disclosure is related to combining analytics processes with advanced machine learning APIs (Application Programming Interfaces) in order to secure data access in a highly evolving, diverse and heterogeneous landscape. A key objective is to improve security requirements through automated analysis and anomaly detection.

The implementing the clustering algorithm may comprise (e.g. implementing a k-means clustering algorithm on the points by): selecting a plurality of random points as centroids; for each of the other points, calculating a distance in the meta-feature space between the point and each centroid; and assigning each point to its closest centroid.

The selecting at least one point as the anomaly may comprise comparing the distance in the meta-feature space of each point from its closest centroid and selecting at least one point with the largest distance in the meta-feature space from its closest centroid as an anomaly.

The implementing the clustering algorithm may comprise, after assigning the points to their closest centroids, performing a re-calculation step/process comprising: re-calculating (the position in the meta-feature space of) each centroid as an average of the points assigned to the centroid; calculating a distance in the meta-feature space between each point and each centroid; and assigning each point to its closest centroid.

The method may comprise repeating the re-calculation step/process until the (positions in the meta-features space of the) centroids do not change.

Each centroid (or the position in the meta-feature space of each centroid) after a re-calculation step may be defined through a vector comprising for each meta-feature an average of the corresponding computed meta-features of the points assigned to the centroid.

Assigning each point to its closest centroid may comprise, for each point, assigning the point to its closest centroid and then recalculating (the position in the meta-feature space of) the centroid as an average of the points assigned to the centroid.

The method may comprise repeating the assigning each point to its closest centroid, including re-calculating the centroid, until the (positions in the meta-features space of the) centroids do not change.

A said centroid (e.g. the position in the meta-feature space of a said centroid) after re-calculation may be defined through a vector comprising for each meta-feature an average of the corresponding computed meta-features of the points assigned to the centroid. The distance in the meta-feature space may be a Euclidean distance.

The selecting a plurality of random points as centroids may comprise selecting k random points as the centroids, wherein k ≤ 10 or k ≤ 5 or k = 2 or k = 3.

The method may comprise receiving data of at least one of the distance, time, and velocity, and selecting as the at least one trajectory feature at least one of the distance, time, and velocity of which data is received.

The method may comprise, prior to computing the meta-features, determining which meta-features to compute.

The selection of the at least one trajectory feature and/or the determination of which meta-features to compute may be based on user (expert or subject-matter expert) input and/or an assessment of previous iterations of the clustering algorithm using different trajectory features and/or meta-features.

The method may comprise receiving data of the velocity. The computing for each trajectory a plurality of meta-features may comprise computing, based on the data, the maximum value, the mean value, and the standard deviation of the velocity of each trajectory.

The plurality of vehicle trajectories may comprise at least one trajectory of at least one vehicle. The plurality of vehicle trajectories may comprise at least one trajectory of at least one land-based vehicle, e.g. car.

The trajectory feature of distance may be distance travelled by the vehicle to which the vehicle trajectory relates, and/or the trajectory feature of velocity may be velocity of the vehicle to which the vehicle trajectory relates.

The at least one vehicle may be at least one autonomous or semi-autonomous or self-driving or assisted-driving vehicle.

The method may comprise, before computing the meta-features, normalizing the data across different data attributes.

The different data attributes may comprise at least one of GPS coordinates, timestamps, and speed measurements.

The normalizing the data may comprise converting the different data attributes to a common scale, e.g. with a predefined average, optionally with a pre-defined standard deviation. The predefined average may be zero and/or the predefined standard deviation may be one.

The data may define a plurality of events for each vehicle trajectory. Each event may be defined by the at least one trajectory feature. The data may comprise, for each at least one trajectory feature, a set of absolute differences between values of the at least one trajectory feature corresponding to consecutive said events.

The data may define a plurality of events for each vehicle trajectory, each event defined by the velocity of a (the) vehicle to which the vehicle trajectory relates. The data may comprise a set of absolute differences between values of the velocity corresponding to consecutive said events.

The data may define a plurality of events for each vehicle trajectory, each event defined by the distance travelled by (the) vehicle to which the vehicle trajectory relates. The data may comprise a set of absolute differences between values of the distance corresponding to consecutive said events.

The data may define a plurality of events for each vehicle trajectory, each event defined by the time at which the event occurred. The data may comprise a set of absolute differences between values of the time corresponding to consecutive said events.

The data may define, for each vehicle trajectory: a plurality of values of a/the velocity of a/the vehicle to which the vehicle trajectory relates; and/or a plurality of values of a/the distance travelled by a/the vehicle to which the vehicle trajectory relates.

The data may define, for each vehicle trajectory: a set of absolute differences between consecutive values of a plurality of values of a/the velocity of a/the vehicle to which the vehicle trajectory relates; and/or a set of absolute differences between consecutive values of a plurality of values of a/the distance travelled by a/the vehicle to which the vehicle trajectory relates.

The values of the velocity and/or the values of the distance may be values at regular time intervals.

The computing for each trajectory a plurality of meta-features may comprise computing, based on the data, the maximum value, the mean value, and the standard deviation of the set of absolute differences of each trajectory.

The method may comprise outputting information indicating the selection of the at least one anomalous vehicle trajectory, for example as a warning and/or on a display.

The method may comprise outputting information for each vehicle trajectory indicating the distance in the meta-feature space of the corresponding point to its closest centroid.

The method may comprise outputting information indicating a priority of each vehicle trajectory based on the distance in the meta-feature space of the corresponding point to its closest centroid. A larger said distance in the meta-feature space may correspond to a higher priority.

According to an embodiment of a second aspect there is disclosed herein use of the method according to the first aspect in a vehicle security system.

According to an embodiment of a third aspect there is disclosed herein a computer program which, when run on a computer, causes the computer to: using data of at least one of distance, time, and velocity as at least one trajectory feature, the data defining a plurality of vehicle trajectories, compute for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features; implement a clustering algorithm on the points and select, based on a result of the clustering algorithm, at least one point as an anomaly; and select the at least one vehicle trajectory corresponding to the at least one point as at least one anomalous vehicle trajectory.

The computer program may further cause the computer to output information indicating the selection of the at least one anomalous vehicle trajectory.

According to an embodiment of a fourth aspect there is disclosed herein an information processing apparatus comprising a memory and a processor connected to the memory, wherein the processor is configured to: using data of at least one of distance, time, and velocity as at least one trajectory feature, the data defining a plurality of vehicle trajectories, compute for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features; implement a clustering algorithm on the points and select, based on a result of the clustering algorithm, at least one point as an anomaly; and select the at least one vehicle trajectory corresponding to the at least one point as at least one anomalous vehicle trajectory.

The processor may be configured to output/display information indicating the selection of the at least one anomalous vehicle trajectory.

Features relating to any aspect/embodiment may be applied to any other aspect/embodiment.

Reference will now be made, by way of example, to the accompanying drawings, in which:
- Figure 1: is a diagram illustrating possible attacks;
- Figure 2: is a diagram illustrating a GPS spoofing attack;
- Figure 3: is a flowchart useful for understanding the present disclosure;
- Figure 4: is a flowchart of an anomaly detection method;
- Figure 5: is a flowchart useful for understanding the present disclosure;
- Figure 6: is a flowchart useful for understanding the present disclosure;
- Figure 7: shows graphs illustrating results of a clustering algorithm;
- Figure 8: is a flowchart of an anomaly detection method;
- Figure 9: is a pair of graphs illustrating results of a clustering algorithm;
- Figure 10: is a graph illustrating results of a clustering algorithm;
- Figure 11: is a graph illustrating results of a clustering algorithm; and
- Figure 12: is a schematic diagram of an apparatus.

This disclosure focuses on providing post-production security measures for connected vehicles, which is becoming more important due to regulations and standards such as WP.29, ISO/SAE 21434. The underlying security challenges may be overcome through automated analysis capabilities and IT Service Management tools. Methodology disclosed herein involves collecting and scrutinising the high volume of data generated and used in this highly complex heterogeneous environment, working to detect anomalies and suspicious behaviours and ultimately to identify possible attacks whilst they are occurring, i.e. before the outcome of the attack, e.g. before the vehicle reaches a destination at which it will be stolen.

Disclosed herein is an unsupervised classification solution based on meta-feature selection for anomaly detection, including using specifically designed meta-features adapted to anomaly classification. This methodology is primarily adapted for large scale anomalous occurrence detection.

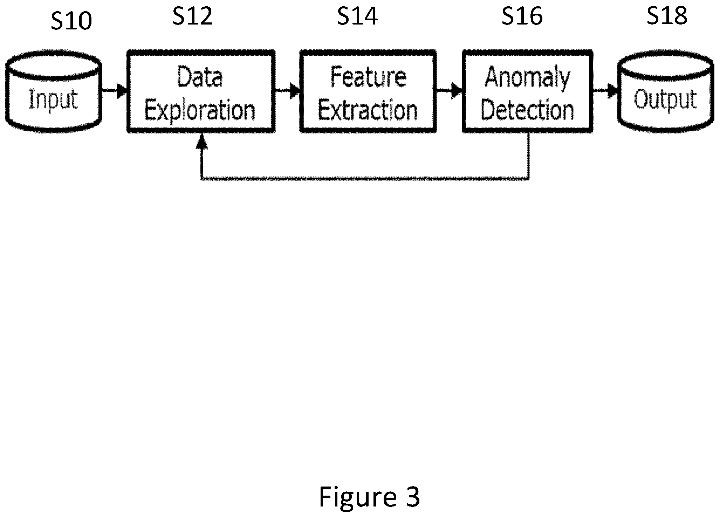

**Figure 3** is a flowchart illustrating a method for anomaly detection as a comparative example. The method illustrated in Figure 3 as a comparative example comprises in step S10 receiving input of data, in steps S12 and S14 exploring the data to extract features from the data, in step S16 an anomaly detection process, and in step S18 outputting the results of the anomaly detection process.

The set of features used for anomaly detection (the features extracted at step S14) have a significant influence on the performance of the detection algorithm (i.e. on the anomaly detection process in step S16, and on the method as a whole shown in Figure 3). Using relevant features would result in less redundant and/or noisy data being used for the detection, thus reducing the risk of overfitting and instead improving the model's (i.e. the method's) overall accuracy. Using irrelevant or redundant features may have a detrimental effect on the performance of the method shown in Figure 3. As shown in Figure 3, the method of the comparative example relies on feature extraction methods to find the most relevant features to be used in detecting anomalies and attacks.

The following features of the method for anomaly detection in accordance with an embodiment in particular will be described herein in more detail:
i. The design and use of specific meta-features based on features extracted from data in order to classify and detect anomalous occurrences.
ii. Implementing a clustering algorithm, for example an unsupervised K-Means algorithm, for classifying anomalous occurrences based on the newly created meta-features.
iii. A distance measure for computing a weighting parameter in order to prioritize anomalous occurrences (e.g. prioritize for further handling by human operators).

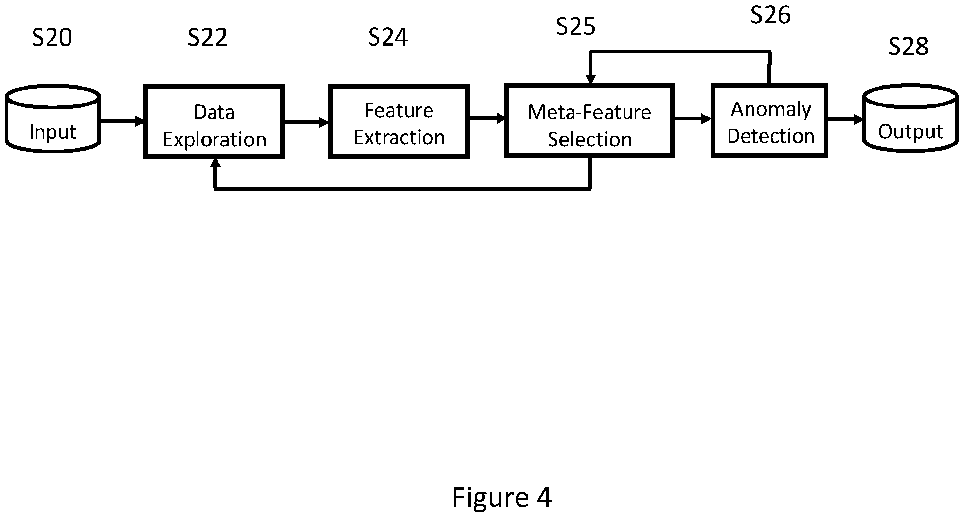

**Figure 4** illustrates a method for anomaly detection. The method comprises in step S20 receiving input of data, in steps S22 and S24 exploring the data to extract features from the data, in step S25 the selection and generation of meta-features, in step S26 an anomaly detection process, and in step S28 outputting the results of the anomaly detection process.

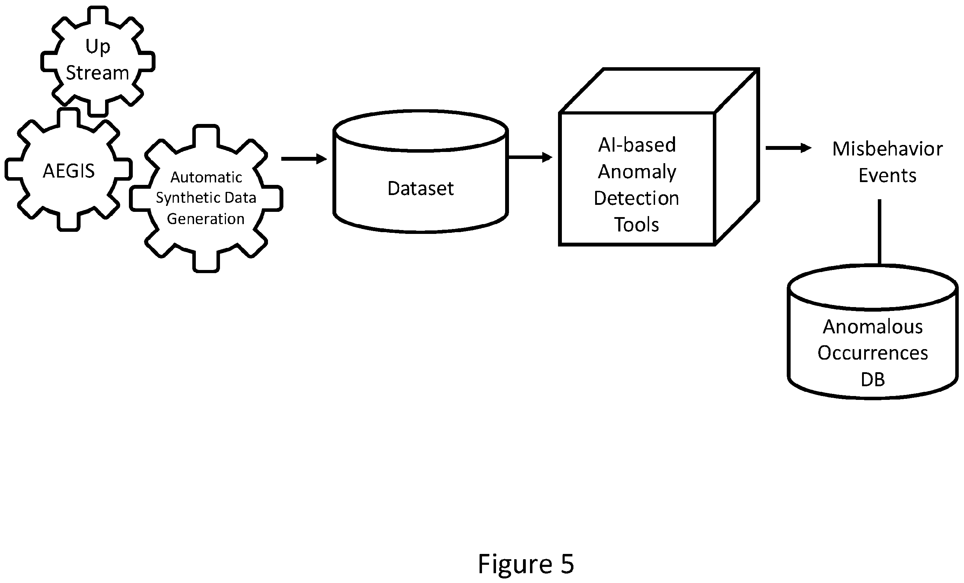

**Figure 5** provides an overview of some steps covered by the method shown in Figure 4. First, data collected and generated from different heterogeneous sources are used as input for the method. Figure 5 illustrates use of the AEGIS dataset. The AEGIS dataset is an open data set provided through the AEGIS (Advanced Big Data Value Chain for Public Safety and Personal Security) European project, which is an EC H2020 Innovation Action, aimed at creating an interlinked "Public Safety and Personal Security" Data Value Chain, and at delivering a novel platform for big data curation, integration, analysis and intelligence sharing (more detail can be found at https://www.aegis-bigdata.eu/). Then, a comprehensive list of all the available data is generated from the AEGIS dataset and introduced into the Al-based tool for anomaly detection. This list of data may comprise (millions of) in-vehicle and ICT (information communication technology) event logs.

The output of the system may be a full list of anomalous occurrences. These may include e.g. unreasonable location changes, a high volume of vehicle messages, or suspicious activity on a vehicle. A priority score may be calculated for each anomalous occurrence based on a similarity analysis with previously detected (anomalous and non-anomalous) occurrences, and this priority score may be included in the output. Depending on the specific implementation of the detection algorithm (i.e. the anomaly detection process of step S26), different measures and/or metrics may be introduced in order to calculate the values of the priority score.

The output of the method (e.g. displaying the priority score of all the occurrences or some of the occurrences, or displaying an indication of the anomalous occurrences optionally with their priority scores) may for example help a human operator in responding to possible attacks, e.g. by handling occurrences identified as anomalous and/or with high priority scores first. Handling lower level occurrences (e.g. those with low priority) may then be either postponed or discarded altogether depending on the case. The method may increase the reactivity and efficiency of V-SOC (Vehicular Security Operation Centre - a centralized entity within an organization employing people, processes, and technology to continuously monitor and improve an organization's security position while preventing, detecting, analysing, and responding to cybersecurity incidents revolving around connected cars) operators by e.g. speeding up the handling time of anomalies. Specifically designed meta-features, based on previously selected features, are used in the method shown in Figure 4 (i.e. step S25) in order to classify and detect the occurrence of anomalous behaviours (to detect anomalous occurrences). When designing/considering a new meta-feature, an iterative process may be followed to create the most appropriate meta-feature. The quality and significance of newly generated meta-features for detecting the presence of anomalies would help decide which data attributes to be included and which to be disregarded during future "data exploration" phases of the method (as illustrated by the arrow from step S25 (Meta-Feature Selection) to step S22 (Data Exploration)).

Data attributes as used above and herein are for example the different sources of the data - e.g. GPS data and data from a vehicle's speedometer. Data attributes may also be used to mean the different formats of data even if they originate from the same source. Which (subset of) meta-features are the most relevant for use in the anomaly detection process/algorithm (step S26) may be changed periodically or continuously adjusted based on the overall performance of the method e.g. in terms of detection accuracy, number/rate of false positives and/or negatives, etc. (as illustrated by the arrow from step S26 (Anomaly Detection) to step S25 (Meta-Feature Selection)). External feedback from a subject matter expert may also be considered for selecting the most relevant meta-features to be included.

That is, input from a "subject matter expert" may aid in the determination of the best/most appropriate features and meta-features to be used in the anomaly detection process/algorithm (step S26). For example, a subject matter expert may analyse the results from the feedback loops (the two arrows used in Figure 4). A subject matter expert may be a user with an understanding of the intertwined relations between data and decision making.

The method shown in Figure 4 includes the feedback loops and uses the wording "meta-feature selection" for step S25, however this is only to illustrate the possible continual adjustment of the features and meta-features used. Step S25 may be considered instead as a computation of already-determined meta-features, with the continual adjustment a separate step and process - that is, the feedback loops shown in Figure 4 may be absent when the method is in use in detecting anomalies. Whilst the method for anomaly detection is for automatically detecting anomalies in the data, feedback from a subject matter expert may be useful in the assessment of the quality (precision, accuracy, etc.) of the method. Furthermore, the feedback loops shown in Figure 4 and/or the input of the input of the subject matter expert may be implemented in a "system design" phase (i.e. testing and setting up a system for performing the method) before using the method or as a process of adjusting the method and for example not in the usual operation of the method for anomaly detection.

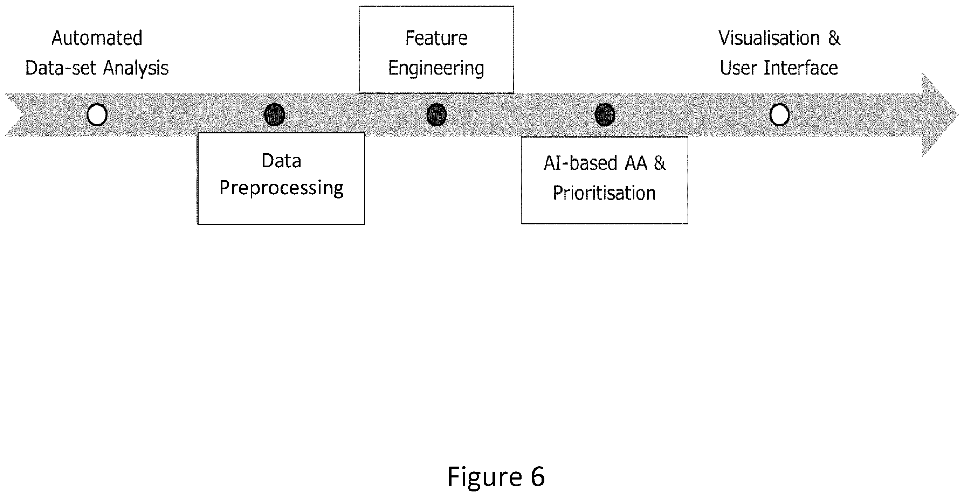

**Figure 6** illustrates the steps followed in designing an anomaly detection method. The steps discussed in particular below are highlighted.

### i. Data pre-processing:

Intrusion data sets (data sets which include records of anomalous occurrences, i.e. traces for intrusions and/or cyber-attacks), which may be used as a benchmark for training and testing detection tools, comprise heterogeneous sources and data types, and may include a wide range of attributes, which may have different scales and different distributions. Specifically, some attributes, for instance, may have a wide range of values while other attributes may be very narrowly distributed. Two different attributes may for example be GPS location information and speedometer information. These differences in the distribution of the data may make it difficult to measure the similarities or significant differences between variables/categories in the data sets. Normalization and scaling operations of the data into the same scale are used to address this problem. Specifically, the data are converted into a "normal" form. Normalization (or standardization) is the most commonly used method to convert all the different attributes available into a common scale, for example with an average of zero and a standard deviation equal to one.

Normalization may be useful when dealing with attributes with incomparable units (e.g. time, distance, speed, acceleration, etc.). Even if the data attributes share the same units but show quite different variances, normalization of the values may be useful. Otherwise, attributes with higher variances would have greater impact on the decision-making process (i.e. on the identification of anomalous occurrences) compared to attributes with smaller variances. This is equivalent to putting more weight, in terms of decision making, on attributes with greater variances, which it is useful to avoid.

Normalization is not essential. Furthermore, the data which is input for the method of anomaly detection may be normalized.

### ii. Feature engineering:

Feature engineering is the process of transforming input data (initial attributes) into specific features (newly created attributes) which aims to provide a better understanding and a more specific representation of the underlying values in the data. It may also be perceived as a different representation of the data derived from raw (initial) data in order to better describe its hidden characteristics and solve the problem at hand. Specific domain knowledge and active involvement of subject matter experts at this stage of the processing cycle may be useful in the feature engineering process. Through their extensive knowledge about the underlying intricacies of the selected use case and possible attacks, subject matter experts may help: (i) identifying the most relevant attributes, (ii) selecting useful meta-features to be used in the detection algorithm, and (iii) ensuring that the overall method for anomaly detection works properly and the algorithms are applied/adapted correctly.

As mentioned above, input from a subject matter expert may be used in a "system design" phase or as part of an adjustment process and not necessarily during the usual operation of the method shown in Figure 4. That is, a system implementing the method may be programmed with which meta-features/attributes to select (for example as a result of a system design phase optionally incorporating a subject matter expert's input).

### iii. Al-based Anomaly Analysis & Prioritization:

After running the anomaly detection algorithms, the results are output. The output is shown to a user (in a comprehensive manner) for example alerting the user to any anomalous occurrences, optionally also indicating a priority of each anomalous occurrence. This may assist the user to make a decision about the most appropriate action that needs to be implemented to handle any anomalous occurrences.

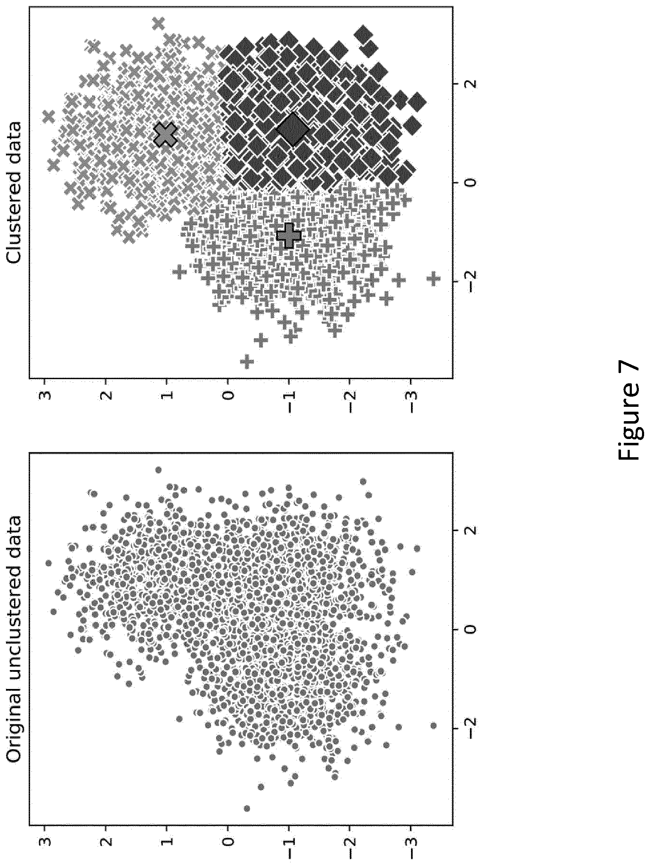

**Figure 7** shows a typical example of the results of running a clustering algorithm using different shaped points for different clusters. Clustering is useful in the field of intrusion detection (as described in: "An Overview of Anomaly Detection Techniques: Existing Solutions and Latest Technological Trends" by Patcha, A. et al, Computer Networks, Volume 51, Issue 12, 22 August 2007, pp. 3448-3470; and "Anomaly Detection: A Survey" by Chandola, V et al, ACM Computing Survey Journal, Volume 41 Issue 3). An advantage of using clustering algorithms is their ability to learn from and detect anomalies in data without explicit descriptions of their signatures, which otherwise usually needs to be provided by highly trained security experts.

Two different classes of clustering tools may be used for anomaly detection: supervised and unsupervised. While the first class (supervised models) requires training using labelled data in order to build profiles for normal and anomalous occurrences/behaviour, the second class (unsupervised models) is more flexible. Clustering tools of the unsupervised class are trained using unlabelled data that consists of both normal as well as abnormal (i.e. anomalous) occurrences, and operate based on the assumption that anomalous or attack data forms a small percentage of the total data and thus anomalies and attacks may be detected based on cluster sizes such that, when the data is plotted, large clusters of data correspond to normal data (i.e. non-anomalous occurrences) and the rest of the data points, which are outliers, correspond to attacks/anomalous occurrences (as also described in: "An Overview of Anomaly Detection Techniques: Existing Solutions and Latest Technological Trends" by Patcha, A. et al, Computer Networks, Volume 51, Issue 12, 22 August 2007, pp. 3448-3470; and "Anomaly Detection: A Survey" by Chandola, V et al, ACM Computing Survey Journal, Volume 41 Issue 3).

The k-Means algorithm (or k-means clustering algorithm) is an unsupervised clustering algorithm and may be used to automatically recognize groups/clusters of similar occurrences/instances/items/objects/points in data. The k-means clustering algorithm classifies occurrences defined by the data to a pre-defined number (k) of clusters (where k is, e.g., specified by a user).

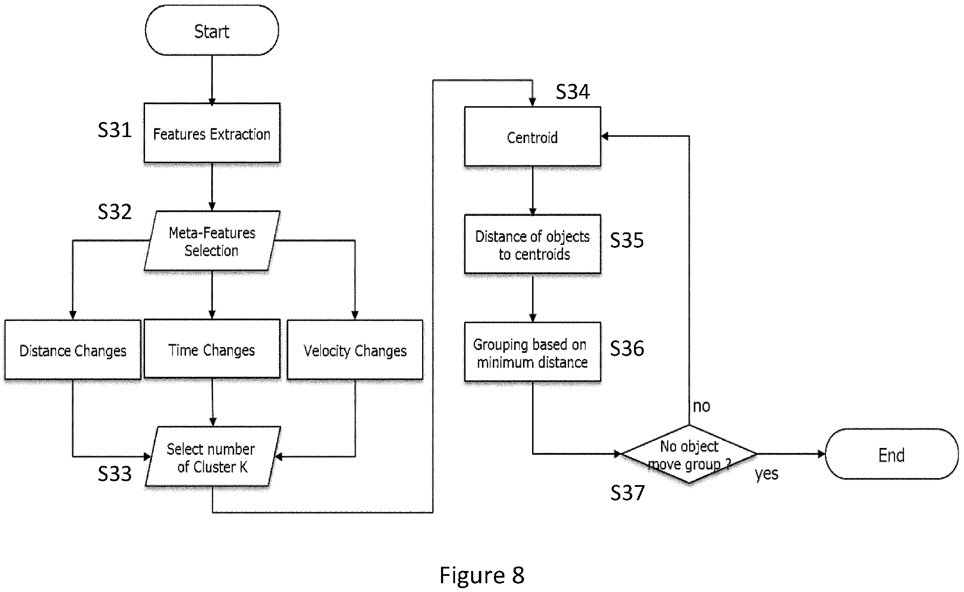

**Figure 8** is a flowchart illustrating a method for anomaly detection. This method may be used for identifying anomalous vehicle trajectories. That is, the data may comprise/define vehicle trajectories (multiple trajectories of one vehicle, or one trajectory from each of a plurality of vehicles, or at least one/one or more trajectories from each of a plurality of vehicles). Such vehicle trajectories may include information about the distance travelled by the vehicle and/or the speed/velocity of the vehicle at different times. Vehicle trajectories are described in more detail later.

The method illustrated in Figure 8 may take place after performing initial pre-treatment operations on available data (analysis, normalization, etc.). That is, the method may be provided at the start with data that has been normalized. At step S31, features are extracted from the data. The features extracted from the data may be referred to as trajectory features. A trajectory feature may, for example, be data of distance, time, or speed/velocity. At least one trajectory feature may be extracted from the data. This step may instead be incorporated into the pre-processing stage and instead the method may be considered to start at step S32 and be provided with extracted features. Or, the step S31 may instead be considered to comprise receiving data of at least one of distance, time, and velocity as at least one trajectory feature, the data defining a plurality of vehicle trajectories.

Step S32 comprises generating/computing/extracting meta-features from the trajectory features using statistical measures (maximum values, average values and standard-deviation). That is, step S32 comprises computing for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features.. A sub-step of step S32 is illustrated in Figure 8 in which a selection is made of which meta-features to use. This sub-step is not essential and may for example be considered in a "system design" phase and may be made with input from a subject matter expert at the initialization phase. More detail about the selection (i.e. about which trajectory features and which meta-features may be used in the following method steps) will be described later.

Step S33 comprises selecting a number k of clusters to be used for the clustering algorithm. This step may be omitted and may be part of the "system design" phase (or an adjustment process as previously described). Step S34 comprises selecting/choosing a set of k "instances" as centroids (centres of the clusters) randomly, usually choosing one for each cluster as far as possible from each other. The "instances" in this case are the points in the meta-feature space which each represent a vehicle trajectory.

Next, the clustering algorithm continues to read each instance from the data set and assigns it to the nearest cluster. That is, step S35 comprises computing the distance in the meta-feature space of each point to its nearest centroid and step S36 comprises assigning each point to its nearest centroid. There are different methods to measure the distance between each instance and the centroids, e.g. Euclidian distance, Max-min distance, Cosine Similarity, Jaccard similarity, edit distance, etc. (for example as described in: "K-means clustering using max-min distance measure" by Visalakshi, N. K. et al, Annual Conference of the North American Fuzzy Information Processing Society (NAFIPS), available at https://doi.org/10.1109/NAFIPS.2009.5156398; and "Impact of normalization in distributed K-means clustering" by Visalakshi, N. K. et al, in International Journal of Soft Computing (Vol. 4, Issue 4, pp. 168-172), available at https://medwelljournals.com/abstract/?doi=ijscomp.2009.168.172). In a particular implementation, the Euclidian distance is used as the distance measure.

The cluster centroids are recalculated after every instance insertion (i.e. after all of the points/instances have been assigned) until the centroids do not change position (in the meta-feature space). That is, a cluster centroid after re-calculation is defined through a vector that contains, for each variable (or dimension of analysis), the mean value of all the different observations within that cluster (i.e. each centroid is an average of all the points assigned to it - in particular a vector comprising for each meta-feature in the meta-feature space an average of the values of that meta-feature of all of the points assigned to the centroid). This process (steps S34 to S37) is iterated until no more changes are made. This is illustrated by step S37 which comprises a determination of whether there is no movement of the centroids based on the recalculation. Each cluster centroid could also be recalculated each time a point/instance is assigned to it.

The method may comprise a step of selecting at least one point as an anomaly based on the clustering, and selecting the at least one vehicle trajectory corresponding to the at least one point as an anomalous trajectory. The method may comprise outputting a determination of the at least one anomalous vehicle trajectory and/or an alert indicating the at least one anomalous vehicle trajectory and/or a list of the vehicle trajectories along with their corresponding priorities (the priorities based on the distance of each point to its nearest centroid).

The k-Means algorithm used in the method is explained in this following pseudo code:
1. Calculate meta-features (max, mean, std).
2. Select meta-features.
3. Select the total number of clusters (k).
4. Choose k random points and set as centroids.
5. Calculate the distance from each instance/point to all centroids using Euclidean method.
6. Assign each instance/point to its closest centroid.
7. Recalculate the positions of the centroids.
8. Repeat steps 5-7 until the centroids (centroid positions) do not change.

In an example, the method may be tested using as input data location data for example available through the AEGIS dataset. This implementation may therefore detect possible attacks through determining "unreasonable" changes in location. The data includes traces for 33 trajectories with different lengths from 33 different cars. In other words, the data defines a plurality of vehicle trajectories. The data defines for each event in each vehicle trajectory: a timestamp, trip id, and GPS coordinates.

After initial pre-processing and analysis, the following features are computed: time changes, distance changes and velocity changes. The changes are defined as the absolute values of the differences between values of a trajectory feature (distance, time, or velocity) corresponding to consecutive events. Instead, the method may be provided with the set of differences as the trajectory features rather than calculating the differences as part of the method.

For example, the data may comprise, for each at least one trajectory feature, a set of absolute differences between values of the at least one trajectory feature corresponding to consecutive said events. That is, if a trajectory feature is distance, the data may comprise a set of absolute differences between values of the distance corresponding to consecutive said events. If a trajectory feature is speed/velocity, the data may comprise a set of absolute differences between values of the velocity/speed corresponding to consecutive said events. If a trajectory feature is time, the data may comprise a set of absolute differences between values of the time corresponding to consecutive said events.

An event may be a measurement of a trajectory feature (e.g. distance or speed/velocity) of a vehicle at a particular time, e.g. at a predefined time, or after elapse of a predefined amount of time from a previous measurement, or at a randomly selected time. An event may be a measurement of time triggered by a particular criterion - for example when a particular distance is travelled, or a particular speed/velocity reached or a particular acceleration reached. Instead of using differences of trajectory feature values of consecutive events, the data may comprise average values of each at least one trajectory feature over a (set/predefined/predetermined) period of time - e.g. an average value of the distance travelled every 2 or 5 minutes.

For each vehicle trajectory a plurality of meta-features are computed by computing, based on the data, at least one of a maximum value (max), a mean value (mean), and a standard deviation (STD) of at least one of the at least one trajectory feature of each vehicle trajectory, so that each vehicle trajectory is represented by a point in a meta-feature space, the point defined by the plurality of meta-features. The meta-features are used as inputs for the clustering algorithm. Various combinations of meta-features and features may be used in the method. For example, two or three or more meta-features may be used, to make the meta-feature space two-dimensional or three-dimensional or have more dimensions. The mean, max, and STD of velocity (differences) may be used. Or the mean and max of the velocity (differences) may be used. Or the mean of the velocity (differences) and the mean of the distance (differences) may be used. Or the max of the velocity (differences) and the mean of the distance (differences) and the STD of the time (differences) may be used. It is apparent that there exist many different combinations of trajectory features and meta-features for use in the method and an exhaustive list is not provided here.

The method may comprise receiving only the necessary features and computing only the necessary meta-features which will be used in the clustering algorithm, or the method may comprise receiving more trajectory features than will eventually be used in the clustering algorithm and/or computing more meta-features than will eventually be used in the clustering algorithm, and a selection among the features and meta-features may be made (optionally with input from a subject matter expert). Testing and assessing the performances of the different possible combinations of features/meta-features through trial and error may be implemented by the system carrying out the method to determine which features/meta-features to use.

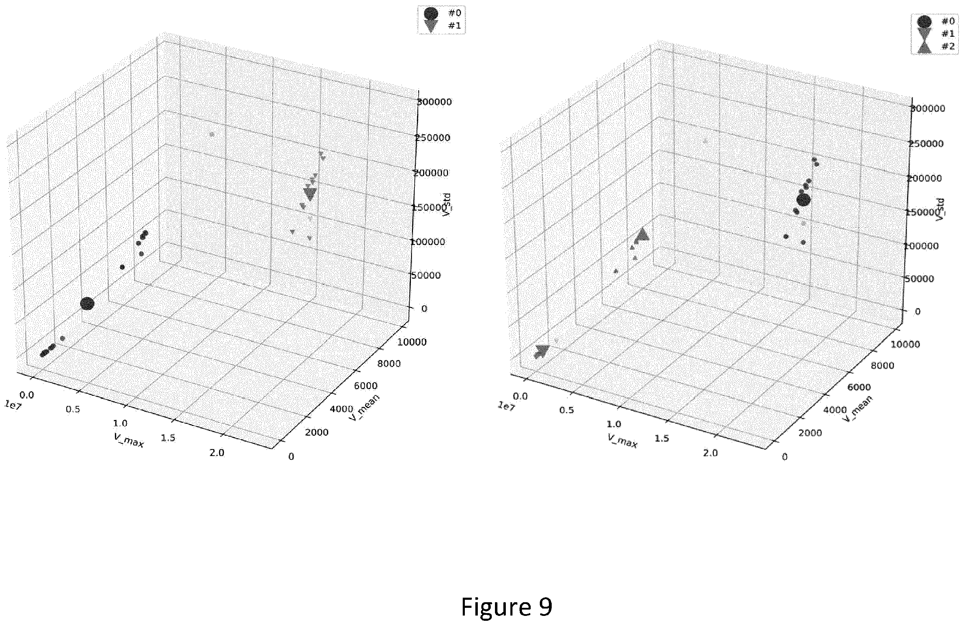

**Figure 9** shows two graphs illustrating the results of performing the k-means clustering algorithm as described above on the data from the AEGIS dataset, using as meta-features the mean, max, and STD of velocity changes. The graph on the left shows the results for k=2 whilst the graph on the right shows the results for k=3. The centroid to which each point is assigned is indicated by the shape of the point. Each point in each graph corresponds to one of the 33 vehicle trajectories in the data.

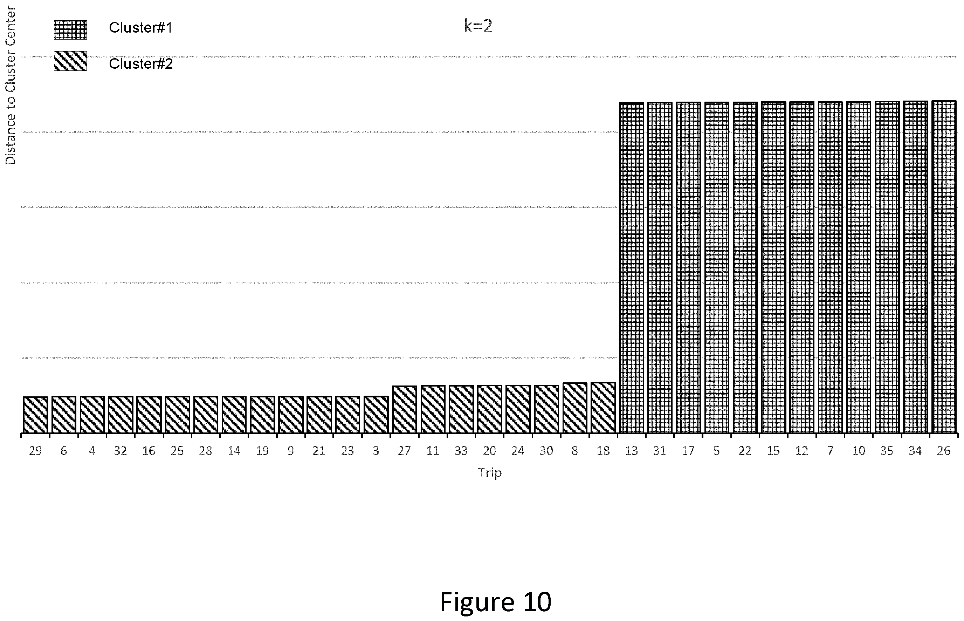

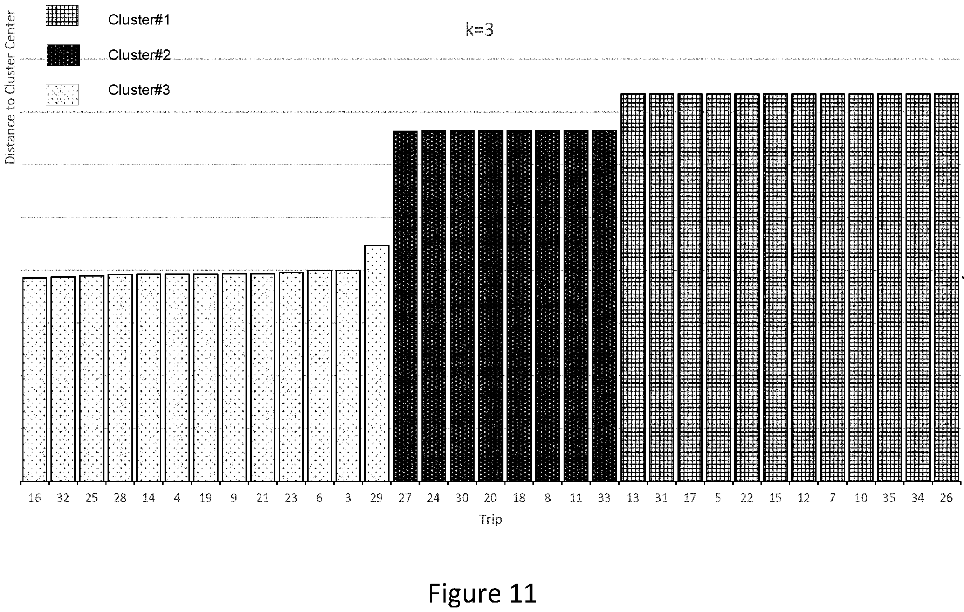

The distance in the meta-feature space between each point and its centroid (cluster centre) is calculated after the clustering and the obtained values are used for the prioritization of the different vehicle trajectories. **Figure 10** is a graph illustrating the results of this calculation and prioritization for the k=2 clustering results. **Figure 11** is a graph illustrating the results of the calculation and prioritization for the k=3 clustering results. A graph like those shown in Figures 10 and 11 may be output by the method, or a list of vehicle trajectories in order of their priority may be output, or at least one vehicle trajectory with the largest distance in the meta-feature space from its centroid may be output as at least one anomalous vehicle trajectory. Based on the output, a user is able to focus on the most relevant vehicle trajectory(ies) based on the priority values or based on the determination of the at least one anomalous vehicle trajectories.

The newly designed detection tool (i.e. the method for anomaly detection disclosed herein) aims at achieving early detection of cyber-attacks through detecting anomalous vehicle trajectories and thus potentially dangerous events from a plurality of vehicle trajectories. That is, the data used/analyzed by the tool may be real-time data. "Early detection" here may also be taken to mean less time is taken to detect an attack based on the data compared to, e.g., a human operator trying to look for possible attacks. Further, such a human operator would need to be highly trained with extensive expertise, however the tool requires relatively little training.

Millions of connected vehicles' log entries and alerts originating from different sources may be used as data. The results ultimately help users to respond to potentially dangerous events by alerting the user to anomalous vehicle trajectories or by outputting the priority for each vehicle trajectory. Further, the method output may help support triage operations and simplify audit processes for V-SOC human operators by prioritising events handling and computing similarity with previously known anomalous events. For example, the method may use vehicle trajectories obtained during a predefined time period (e.g. 6, 12, or 24 hours) and may regularly produce an output after each time period to continuously monitor vehicles to alert users to potential attacks.

The methodology of this disclosure may be applied in any other scenario where appropriate meta-features may be used as entries for detecting other types of cyber-attacks targeting networks/systems. In some cases, an analysis would be useful in order to assess the possible impact of any newly introduced meta-features on clustering algorithm performance and general overall anomaly detection performance.

The benefits disclosed throughout this disclosure result from introducing and using specific meta-features as entries for a new implementation of an advanced anomaly detection algorithm based on e.g. an unsupervised K-means clustering algorithm. The output from the clustering algorithm is used to compute a specific distance measure (in the meta-feature space) between each vehicle trajectory and its cluster centre (centroid) in order to identify anomalous trajectories and thus potential attacks and/or to prioritize events handling and processing by a user.

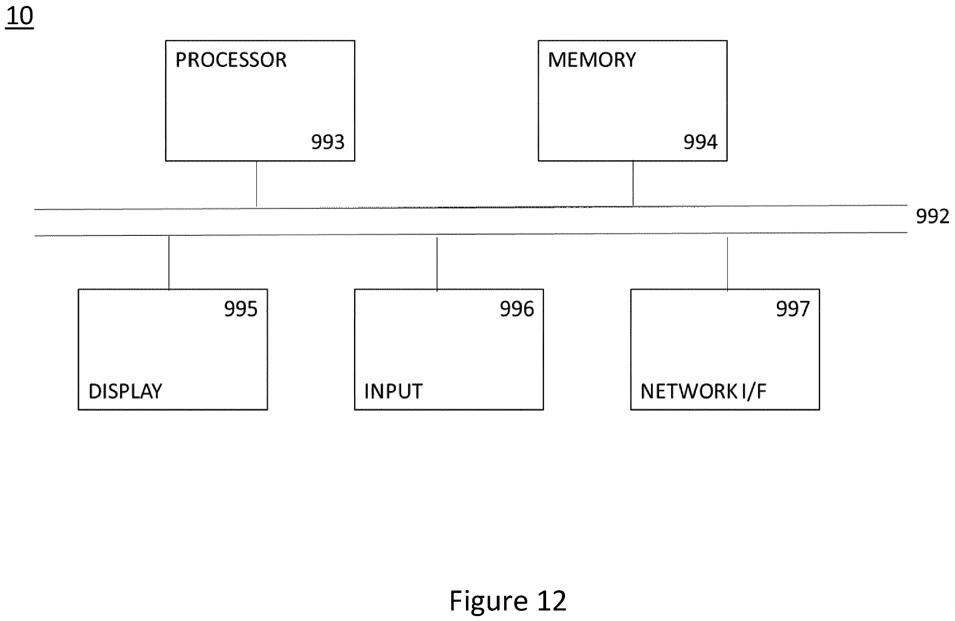

Figure 12 is a block diagram of a computing device 10, such as a data storage server, which embodies the present invention, and which may be used to implement some or all of the operations of a method embodying the present invention, e.g. the method illustrated in Figure 4 and/or Figure 8. The computing device is an example of an apparatus 10 and may be used to implement any of the method steps disclosed herein.

The computing device 10 comprises a processor 993 and memory 994. Optionally, the computing device also includes a network interface 997 for communication with other such computing devices, for example with other computing devices corresponding to invention embodiments. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions, such as in the form of computer program code. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing method steps disclosed herein (method for anomaly detection, e.g. the method illustrated in Figure 3 and/or 4 and/or 8). Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the methods described herein. The memory 994 stores data being read and written by the processor 993, such as vehicle trajectory data and/or anomalous trajectories. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLlW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device and/or any outputs of the methods described herein, such as any of the graphs and/or lists described herein, and/or such as a determination of at least one anomalous vehicle trajectory and/or an alert indicating at least one anomalous vehicle trajectory described above, and may also display a cursor and dialog boxes and screens enabling interaction between a user and the programs and data stored on the computing device. The input mechanisms 996 may enable a user to input data and instructions to the computing device, such as input from a subject matter expert. The display unit 995 and/or input mechanisms 996 may be considered a user interface enabling interaction between a user and the computing device and/or any methods described herein.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 12. Such a computing device need not have every component illustrated in Figure 12, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995 for displaying any output(s) described above. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network. Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:
providing data of at least one of distance, time, and velocity as at least one trajectory feature, the data defining a plurality of vehicle trajectories;
computing for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features;
implementing a clustering algorithm on the points and selecting, based on a result of the clustering algorithm, at least one point as an anomaly; and
selecting the at least one vehicle trajectory corresponding to the at least one point as at least one anomalous vehicle trajectory.

2. The computer-implemented method as claimed in claim 1, wherein the implementing the clustering algorithm comprises:
selecting a plurality of random points as centroids,
for each of the other points, calculating a distance in the meta-feature space between the point and each centroid, and
assigning each point to its closest centroid.

3. The computer-implemented method as claimed in claim 1 or claim 2, wherein the selecting at least one point as the anomaly comprises comparing the distance in the meta-feature space of each point from its closest centroid and selecting at least one point with the largest distance in the meta-feature space from its closest centroid as an anomaly.

4. The computer-implemented method as claimed in any of the preceding claims, wherein the method comprises receiving data of the velocity, and wherein the computing for each trajectory a plurality of meta-features comprises computing, based on the data, the maximum value, the mean value, and the standard deviation of the velocity of each trajectory.

5. The computer-implemented method as claimed in any of the preceding claims, wherein the method comprises, before computing the meta-features, normalizing the data across different data attributes.

6. The computer-implemented method as claimed in any of the preceding claims, wherein the different data attributes comprise at least one of GPS coordinates, timestamps, and speed measurements.

7. The computer-implemented method as claimed in any of the preceding claims, wherein the data defines, for each vehicle trajectory:
a plurality of values of a velocity of a vehicle to which the vehicle trajectory relates; and/or
a plurality of values of a distance travelled by a vehicle to which the vehicle trajectory relates.

8. The computer-implemented method as claimed in any of the preceding claims, wherein the data defines, for each vehicle trajectory:
a set of absolute differences between consecutive values of a plurality of values of a velocity of a vehicle to which the vehicle trajectory relates; and/or
a set of absolute differences between consecutive values of a plurality of values of a distance travelled by a vehicle to which the vehicle trajectory relates.

9. The computer-implemented method as claimed in any of the preceding claims, wherein the computing for each trajectory a plurality of meta-features comprises computing, based on the data, the maximum value, the mean value, and the standard deviation of the set of absolute differences of each trajectory.

10. The computer-implemented method as claimed in any of the preceding claims, wherein the method comprises outputting information indicating the selection of the at least one anomalous vehicle trajectory.

11. The computer-implemented method as claimed in any of claims 2 to 10, wherein the method comprises outputting information indicating a priority of each vehicle trajectory based on the distance in the meta-feature space of the corresponding point to its closest centroid, optionally wherein a larger said distance in the meta-feature space corresponds to a higher priority.

12. Use of the method according to any of the preceding claims in a vehicle security system.

13. A computer program which, when run on a computer, causes the computer to:
using data of at least one of distance, time, and velocity as at least one trajectory feature, the data defining a plurality of vehicle trajectories, compute for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features;
implement a clustering algorithm on the points and select, based on a result of the clustering algorithm, at least one point as an anomaly; and
select the at least one vehicle trajectory corresponding to the at least one point as at least one anomalous vehicle trajectory.

14. The computer program as claimed in claim 13, wherein the computer program further causes the computer to output information indicating the selection of the at least one anomalous vehicle trajectory.

15. An information processing apparatus comprising a memory and a processor connected to the memory, wherein the processor is configured to:
using data of at least one of distance, time, and velocity as at least one trajectory feature, the data defining a plurality of vehicle trajectories, compute for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features;
implement a clustering algorithm on the points and select, based on a result of the clustering algorithm, at least one point as an anomaly; and
select the at least one vehicle trajectory corresponding to the at least one point as at least one anomalous vehicle trajectory.

## Amended claims

### Amended claims in accordance with Rule 137(2) EPC.

1. A computer-implemented method comprising:
providing data of at least one of distance, time, and velocity as at least one trajectory feature, the data defining a plurality of vehicle trajectories;
computing (S32) for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features;
implementing (S34, S35, S36, S37) a clustering algorithm on the points in the meta-feature space and selecting, based on a result of the clustering algorithm, at least one point as an anomaly; and
selecting the at least one vehicle trajectory corresponding to the at least one point as at least one anomalous vehicle trajectory
wherein the selecting at least one point as the anomaly comprises comparing the distance in the meta-feature space of each point from its closest centroid and selecting at least one point with the largest distance in the meta-feature space from its closest centroid as an anomaly.

2. The computer-implemented method as claimed in claim 1, wherein the implementing the clustering algorithm comprises:
selecting (S34) a plurality of random points as centroids,
for each of the other points, calculating (S35) a distance in the meta-feature space between the point and each centroid, and
assigning (S36) each point to its closest centroid.

3. The computer-implemented method as claimed in claim 1 or claim 2, wherein the method comprises receiving data of the velocity, and wherein the computing (S32) for each trajectory a plurality of meta-features comprises computing, based on the data, the maximum value, the mean value, and the standard deviation of the velocity of each trajectory.

4. The computer-implemented method as claimed in any of the preceding claims, wherein the method comprises, before computing (S32) the meta-features, normalizing the data across different data attributes.

5. The computer-implemented method as claimed in claim 4, wherein the different data attributes comprise at least one of GPS coordinates, timestamps, and speed measurements.

6. The computer-implemented method as claimed in any of the preceding claims, wherein the data defines, for each vehicle trajectory:
a plurality of values of a velocity of a vehicle to which the vehicle trajectory relates;
and/or
a plurality of values of a distance travelled by a vehicle to which the vehicle trajectory relates.

7. The computer-implemented method as claimed in any of the preceding claims, wherein the data defines, for each vehicle trajectory:
a set of absolute differences between consecutive values of a plurality of values of a velocity of a vehicle to which the vehicle trajectory relates; and/or
a set of absolute differences between consecutive values of a plurality of values of a distance travelled by a vehicle to which the vehicle trajectory relates.

8. The computer-implemented method as claimed in claim 7, wherein the computing (S32) for each trajectory a plurality of meta-features comprises computing, based on the data, the maximum value, the mean value, and the standard deviation of the set of absolute differences of each trajectory.

9. The computer-implemented method as claimed in any of the preceding claims, wherein the method comprises outputting information indicating the selection of the at least one anomalous vehicle trajectory.

10. The computer-implemented method as claimed in any of claims 2 to 9, wherein the method comprises outputting information indicating a priority of each vehicle trajectory based on the distance in the meta-feature space of the corresponding point to its closest centroid, optionally wherein a larger said distance in the meta-feature space corresponds to a higher priority.

11. The computer-implemented method as claimed in claim 1, wherein the computing (S32) for each trajectory a plurality of meta-features comprises computing, based on the data, at least the standard deviation of the velocity of each trajectory.

12. Use of the method according to any of the preceding claims in a vehicle security system.

13. A computer program which, when run on a computer, causes the computer to:
using data of at least one of distance, time, and velocity as at least one trajectory feature, the data defining a plurality of vehicle trajectories, compute for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features;
implement a clustering algorithm on the points in the meta-feature space and select, based on a result of the clustering algorithm, at least one point as an anomaly; and
select the at least one vehicle trajectory corresponding to the at least one point as at least one anomalous vehicle trajectory,
wherein the computer program, when run on the computer, causes the computer to select the at least one point as the anomaly by causing the computer to compare the distance in the meta-feature space of each point from its closest centroid and select at least one point with the largest distance in the meta-feature space from its closest centroid as an anomaly.

14. The computer program as claimed in claim 13, wherein the computer program further causes the computer to output information indicating the selection of the at least one anomalous vehicle trajectory.

15. An information processing apparatus (10) comprising a memory (994) and a processor (993) connected to the memory (994), wherein the processor (993) is configured to:
using data of at least one of distance, time, and velocity as at least one trajectory feature, the data defining a plurality of vehicle trajectories, compute for each vehicle trajectory a plurality of meta-features by computing, based on the data, at least one of a maximum value, a mean value, and a standard deviation of at least one of the at least one trajectory feature of each vehicle trajectory, so that each vehicle trajectory is represented by a point in a meta-feature space, the point defined by the plurality of meta-features;
implement a clustering algorithm on the points in the meta-feature space and select, based on a result of the clustering algorithm, at least one point as an anomaly; and
select the at least one vehicle trajectory corresponding to the at least one point as at least one anomalous vehicle trajectory,
wherein the processor is configured to select the at least one point as the anomaly by comparing the distance in the meta-feature space of each point from its closest centroid and selecting at least one point with the largest distance in the meta-feature space from its closest centroid as an anomaly.
